# EUROPÄISCHE PATENTSCHRIFT

(11) **EP 0 415 033 B1**
(45) Veröffentlichungstag und Bekanntmachung des Hinweises auf die Patenterteilung: **06.10.1993**
(21) Anmeldenummer: 90113012.0
(22) Anmeldetag: 07.07.1990
(51) Int. Cl.: F16G 13/16

(54) **Energieführungskette**
Supporting chain for energy carriers
Chaîne porteuse pour lignes de transport d'énergie

(30) Priorität: 26.08.1989 DE 3928233
(43) Veröffentlichungstag der Anmeldung: 06.03.1991
(73) Patentinhaber: Kabelschlepp Gesellschaft mit beschränkter Haftung, 57074 Siegen (DE)
(72) Erfinder: Moritz, Werner, D-5900 Siegen (DE)
(74) Vertreter: Kahlhöfer, Hermann, Dipl.-Phys.

(56) Entgegenhaltungen:
- EP-A- 0 124 457
- EP-A- 0 277 389
- DE-C- 3 407 169
- DE-C- 3 617 447
- DE-U- 8 910 216

## Beschreibung

Die Erfindung betrifft eine Energieführungskette mit aus jeweils zwei im Abstand voneinander, parallel zueinander angeordneten Kettenlaschen und einem Verbindungssteg bestehenden Kettengliedern, wobei Kettenlaschen benachbarter Kettenglieder im Überlappungsbereich mit einem Verschlußbolzen aus Kunststoff aneinander gelagert sind.

Aus der DE-C- 34 07 169 ist eine Energieführungskette bekannt, deren Kettenlaschen im Überlappungsbereich mit einem Gelenkzapfen und einer Gelenkbohrung aneinander gelagert sind. Dabei ist der Gelenkzapfen mittels einer Schnappverbindung in die Gelenkbohrung einrastbar. Zu diesem Zweck hat der Gelenkzapfen mehrere durch Schlitze voneinander getrennte Sektoren, die am freien Ende radiale Nuten besitzen, welche über in der Gelenkbohrung radial nach innen vorspringende Ringe einrasten können. Bei dieser bekannten Energieführungskette werden das Gelenklager und das Verriegelungselement von dem gleichen Konstruktionsteilen gebildet.

Ferner ist aus der DE-C- 36 17 447 ein Gelenkbolzen bekannt, der einen Deckel mit zwei benachbarten Kettenlaschen verbindet und in eine zentrale Bohrung eingesetzt ist. Der Gelenkbolzen dient nicht zur Kraftübertragung, sondern ist völlig entlastet und als Schraube, Rundbolzen mit Sicherungsring oder als Schnappverbindung ausgebildet. Ein weiteres Verbindungselement, welches einen leicht lösbaren Formschluß zwischen Deckel und Kettenlasche herstellt, offenbart sehr detailliert einen Bajonettverschluß.

Aus der EP-A- 0 277 389 ist eine Energieführungskette bekannt, deren Kettenglieder im Überlappungsbereich der Kettenlaschen mittels eines Gelenkbolzens zusammengehalten werden, der am freien Ende mit einem Gewinde versehen ist.

Ausgehend von diesem Stand der Technik liegt der Erfindung die **Aufgabe** zugrunde, eine einfach konstruierte Energieführungskette zu schaffen, bei der die Montage mehrteiliger Kettenglieder erleichert wird, insbesondere das Verbinden und Lösen benachbarter Kettenlaschen, ohne dabei den Zusammenhalt beim bestimmungsgemäßen Gebrauch zu gefährden, sowie Sicherungsmaßnahmen gegen eine unerwünschte selbsttätige Verdrehung einzubeziehen.

Als technische **Lösung** wird dafür vorgeschlagen, daß der Verschlußbolzen aus einem Schaft mit an einem Ende angeformten Kopf und am anderen Ende einander gegenüberliegend angeformten, radial abstehenden Nochen besteht, daß jede Kettenlasche zentrisch zur Gelenkachse zwei Verriegelungsbohrungen. mit radialen Schlitzen für die Nocken hat, daß die Schlitze an einer Verriegelungsbohrung auf einer Seite mit in Umfangsrichtung verlaufenden Hinterschneidungen für die Nocken versehen sind, daß die Schäfte der Verschlußbolzen mit axial verlaufenden Schlitzen versehen und die Nocken an radial federnden Schaftteilen angeformt sind und daß im Mantel jedes Nockens eine axiale Nut und in jeder Hinterschneidung am Ende ein damit korrespondierender Vorsprung angeordnet ist.

Bei einer nach dieser technischen Lehre ausgebildeten Energieführungskette können die Kettenlaschen im automatischen Betrieb zunächst zu Kettenbändern beliebiger Länge und sicherem Zusammenhalt vormontiert werden. Dabei übernehmen die Verschlußbolzen schon eine wichtige Funktion, denn sie gewährleisten eine formschlüssige Verbindung, die sich nicht unbeabsichtigt lösen kann. Mit der erfindungsgemäß ausgestalteten Ernergieführungskette ist es möglich, die Formschlußverbindung der Kettenlaschen mit einer kraftschlüssigen Arretierung zu verbinden, die nur noch absichtlich gelöst werden kann.

Es hat sich als ausreichend erwiesen, die Hinterschneidungen auf einem Umfangswinkel von 90° zuzüglich einer Nockenbreite anzuordnen, um einen zuverlässigen, bajonettverschlußartigen Eingriff des Verschlußbolzens zu gewährleisten.

Weitere Einzelheiten und Vorteile ergeben sich aus der nachfolgenden Beschreibung der zugehörigen Zeichnungen, in denen eine bevorzugte Ausführungsform einer erfindungsgemäß ausgebildeten Energieführungskette schematisch dargestellt worden ist. In den Zeichnungen zeigen:
- Fig. 1: ein Sprengbild von zwei benachbarten Kettenlaschen mit Verriegelungsbolzen in perspektivischer Darstellung;

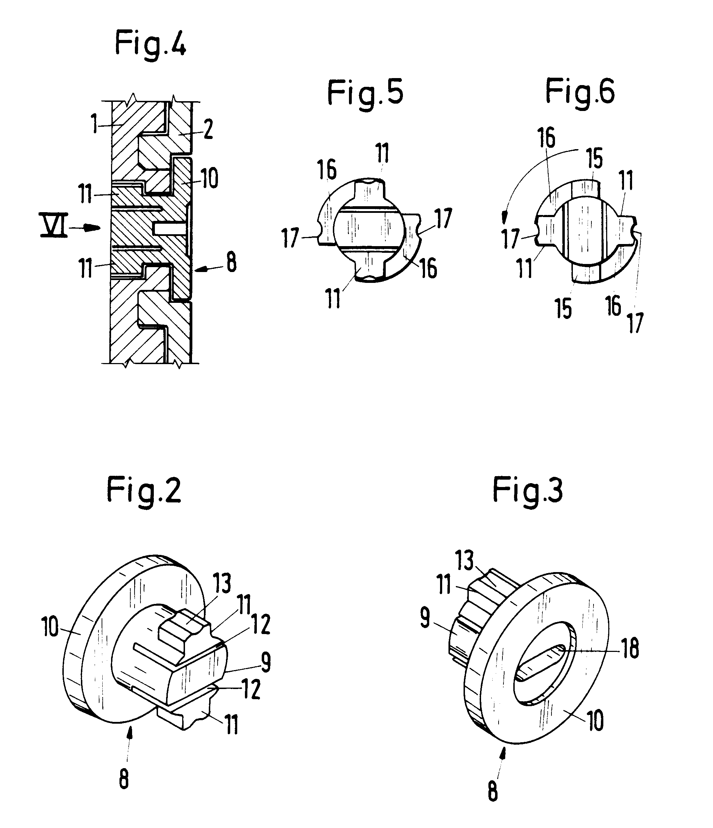

- Fig. 2: einen Verriegelungsbolzen in Ansicht von der Innenseite;
- Fig. 3: denselben Verriegelungsbolzen in Ansicht von der Außenseite;
- Fig. 4: eine Gelenkverbindung im Längsschnitt;
- Fig. 5: eine Gelenkverbindung in Draufsicht von der Innenseite im nicht verriegelten Zustand;
- Fig. 6: eine Gelenkverbindung in Ansicht von der Innenseite her im verriegelten Zustand.

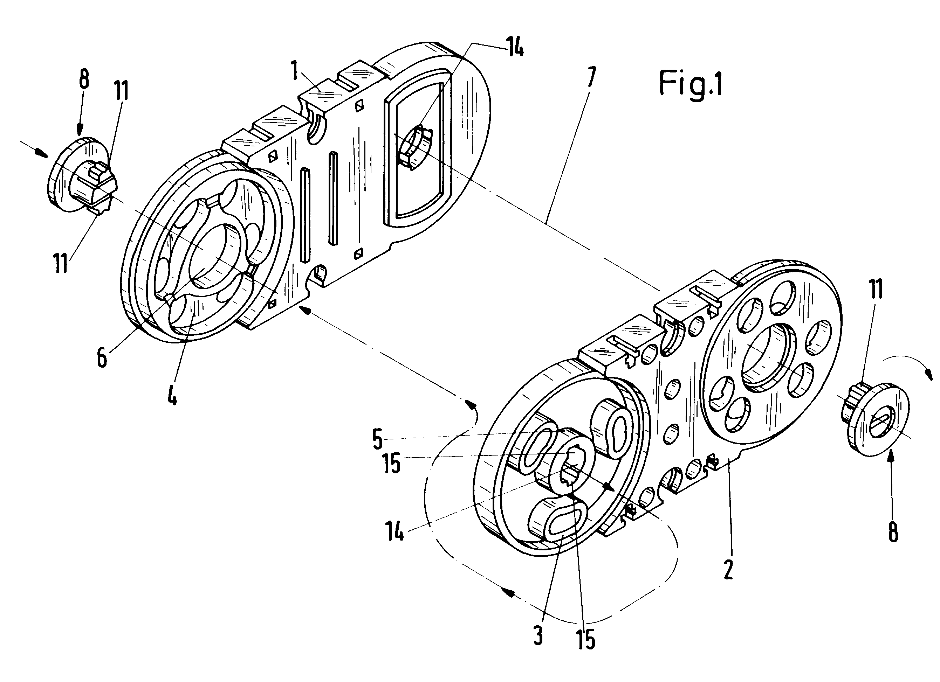

Die Kettenglieder einer Energieführungskette werden aus mehreren Kettenlaschen 1,2 zusammengefügt, die im Überlappungsbereich mit Anschlägen 3 und Ausnehmungen 4 sowie einem Gelenkzapfen 5 und einer Gelenkbohrung 6 ineinandergreifen. Dazu muß die in der Fig. 1 rechts dargestellte Kettenlasche 2 den eingezeichneten Pfeilen folgend um 180° gedreht und mit der Kettenlasche 1 verbunden werden.

An jeder Gelenkachse 7 werden die benachbarten Kettenlaschen 1 und 2 mit einem Verschlußbolzen 8 formschlüssig verbunden. Jeder Verschlußbolzen 8 besteht aus einem Schaft 9 mit einem einseitig angeformten, scheibenförmigen Kopf 10 und am anderen Ende angeformten, in radialer Richtung vorstehenden Nocken 11. In dem Schaft 9 sind in axialer Richtung und parallel zueinander verlaufende Schlitze 12 vorgesehen, damit die Nocken 11 nach innen federn können. Am Mantel sind in den Nocken 11 in axialer Richtung verlaufende Nuten 13 vorgesehen.

In jedem Gelenkzapfen 5 ist konzentrisch zur Gelenkachse 7 eine Verriegelungsbohrung 14 mit in radialer Richtung eingelassenen Schlitzen 15 für die Nocken 11 vorgesehen. Von den Schlitzen 15 gehen in Umfangsrichtung Hinterschneidungen 16 aus, die über einen Umfangswinkel von ca. 90° verlaufen und am Ende nach innen gerichtete Vorsprünge 17 haben, welche in die Nuten 13 der Nocken 11 einrasten können.

Wenn zwei Kettenlaschen 1 und 2 an ihren Überlappungsbereichen zusammengesteckt worden sind, kann an jeder Gelenkachse 7 ein Verschlußbolzen 8 eingeführt und in seiner Endlage um ca. 90° gedreht werden. Dabei werden die Nocken 11 in die Hinterschneidungen 16 geführt und in radialer Richtung etwas nach innen gedrückt, so daß eine formschlüssige und zugleich auch kraftschlüssige Verbindung entsteht. Die Verrastung zwischen den Nuten 13 und Vorsprüngen 17 dient lediglich dem Zweck, die Endlage der Verschlußbolzen 8 zu definieren und auch bei der Montage bzw. Demontage erkennbar zu machen.

Der Kopf 10 jedes Verschlußbolzens 8 ist versenkt in der Kettenlasche 1 bzw. 2 angeordnet und mit einem Schlitz 18 zum Einführen eines Schraubenziehers versehen.

### Bezugszeichenliste

- 1: Kettenlasche
- 2: Kettenlasche
- 3: Anschlag
- 4: Ausnehmung
- 5: Gelenkzapfen
- 6: Gelenkbohrung
- 7: Gelenkachse
- 8: Verschlußbolzen
- 9: Schaft
- 10: Kopf
- 11: Nocken
- 12: Schlitz
- 13: Nut
- 14: Verriegelungsbohrung
- 15: Schlitz
- 16: Hinterschneidung
- 17: Vorsprung
- 18: Schlitz

## Patentansprüche

1. Energieführungskette mit aus jeweils zwei im Abstand voneinander, parallel zueinander angeordneten Kettenlaschen (1,2) und einem Verbindungssteg bestehenden Kettengliedern, wobei Kettenlaschen (1,2) benachbarter Kettenglieder im Überlappungsbereich mit einem Verschlußbolzen (8) aus Kunststoff aneinander gelagert sind,
**dadurch gekennzeichnet,**
daß der Verschlußbolzen (8) aus einem Schaft (9) mit an einem Ende angeformten Kopf (10) und am anderen Ende einander gegenüberliegend angeformten, radial abstehenden Nocken (11) besteht,
daß jede Kettenlasche (1,2) zentrisch zur Gelenkachse (7) zwei Verriegelungsbohrungen (14) mit radialen Schlitzen (15) für die Nocken (11) hat,
daß die Schlitze (15) an einer Verriegelungsbohrung (14) auf einer Seite mit in Umfangsrichtung verlaufenden Hinterschneidungen (16) für die Nocken (11) versehen sind,
daß die Schäfte (9) der Verschlußbolzen (8) mit axial verlaufenden Schlitzen (12) versehen und die Nocken (11) an radial federnden Schaftteilen angeformt sind und
daß im Mantel jedes Nockens (11) eine axiale Nut (13) und in jeder Hinterschneidung (16) am Ende ein damit korrespondierender Vorsprung (17) angeordnet ist.

2. Energieführungskette nach Anspruch 1, dadurch gekennzeichnet, daß die Hinterschneidungen (16) einen Umfangswinkel von 90° plus einer Nockenbreite haben.

3. Energieführungskette nach den Ansprüchen 1 und 2, dadurch gekennzeichnet, daß der Kopf (10), die Nocken (11) und die Hinterschneidungen (16) versenkt in den Kettenlaschen (1,2) angeordnet sind.

4. Energieführungskette nach den Ansprüchen 1 bis 3, dadurch gekennzeichnet, daß im Kopf (10) jedes Verschlußbolzens (8) ein Schlitz (18) zum Ansetzen eines Schraubenziehers vorgesehen ist.

## Claims

1. Energy-carrying chain with chain links, each consisting of two chain plates (1, 2) arranged at a distance from and parallel to one another and of a connecting web, chain plates (1, 2) of adjacent chain links being mounted on one another in the overlap region by means of a locking bolt (8) made of plastic, characterised in that the locking bolt (8) consists of a shank (9) having a head (10) formed on at one end and having radially projecting bosses (11) formed on opposite one another at the other end, in that each chain plate (1, 2) has centrically relative to the pivot axis (7) two locking bores (14) with radial slots (15) for the bosses (11), in that the slots (15) on a locking bore (14) are provided on one side with circumferentially extending undercuts (16) for the bosses (11), in that the shanks (9) of the locking bolts (8) are provided with axially extending slots (12) and the bosses (11) are formed on radially resilient shank parts, and in that an axial groove (13) is arranged in the shell of each boss (11) and a projection (17) corresponding thereto is arranged at the end in each undercut (16).

2. Energy-carrying chain according to Claim 1, characterised in that the undercuts (16) have a circumferential angle of 90° plus one boss width.

3. Energy-carrying chain according to Claims 1 and 2, characterised in that the head (10), the bosses (11) and the undercuts (16) are arranged countersunk in the chain plates (1, 2).

4. Energy-carrying chain according to Claims 1 to 3, characterised in that a slot (18) for applying a screwdriver is provided in the head (10) of each locking bolt (8).

## Revendications

1. Chaîne de guidage pour la transmission d'énergie, comportant des maillons de chaîne constitués chacun de deux joues latérales de chaîne (1, 2) disposées parallèlement l'une à l'autre et à distance l'une de l'autre, et d'une entretoise de liaison, les joues latérales de chaîne (1, 2) de maillons de chaîne voisins étant montées les unes contre les autres dans leur zone de chevauchement, au moyen d'une broche de liaison (8) en matière plastique,
caractérisée
en ce que la broche de liaison (8) est constituée d'une tige (9) à l'une des extrémités de laquelle est formée un tête (10), et à l'autre extrémité de laquelle sont formés des appendices (11) en saillie radiale et opposés l'un à l'autre,
en ce que chaque joue latérale de chaîne (1, 2) possède, de manière centrée sur l'axe d'articulation (7), deux alésages de verrouillage (14) comportant des fentes radiales (15) pour les appendices (11),
en ce que les fentes (15) dans un alésage de verrouillage (14), sur un côté, sont pourvues de contre-dépouilles (16) s'étendant en direction périphérique et destinées aux appendices (11),
en ce que les tiges (9) des broches de liaison (8) sont munies de fentes (12) s'étendant en direction axiale, et les appendices (11) sont formés sur des parties de tige élastiques dans la direction radiale, et
en ce que dans la surface périphérique de chaque appendice (11) est réalisée une rainure axiale (13), et à l'extrémité de chaque contre-dépouille (16), une protubérance (17) correspondante.

2. Chaîne de guidage pour la transmission d'énergie, selon la revendication 1, caractérisée en ce que les contre-dépouilles (16) présentent un angle périphérique de 90° augmenté d'une largeur d'appendice.

3. Chaîne de guidage pour la transmission d'énergie, selon les revendications 1 et 2, caractérisée en ce que la tête (10), les appendices (11) et les contre-dépouilles (16) sont disposées de manière à être noyés dans les joues latérales de chaîne (1, 2).

4. Chaîne de guidage pour la transmission d'énergie selon les revendications 1 à 3, caractérisée en ce que dans la tête (10) de chaque broche de liaison (8), est prévue une fente (18) permettant la mise en oeuvre d'un tournevis.
